# EUROPÄISCHE PATENTANMELDUNG

(11) **EP 1 122 866 A2**
(43) Veröffentlichungstag der Anmeldung: **08.08.2001**
(21) Anmeldenummer: 00127318.4
(22) Anmeldetag: 13.12.2000
(51) Int. Cl.: H02K 9/19

(54) **Elektrische Maschine, insbesondere Drehstromgenerator**

(30) Priorität: 01.02.2000 DE 10004239
(71) Anmelder: ROBERT BOSCH GMBH, 70442 Stuttgart (DE)
(72) Erfinder: Bolz, Martin-Peter, 77815 Buehl (DE); Schenk, Robert, 71665 Vaihingen/Erz (DE); Kappenstein, Ulrich, 75438 Knittlingen (DE)

(57) **Zusammenfassung**

Elektrische Maschine, insbesondere Drehstromgenerator oder Startergenerator, mit einer in deren Ständergehäuse (10) gelagerten, einen Läufer (19) tragenden Welle (22), mit einem an dem Ständergehäuse (10) befestigten, den Läufer (19) umgebenden Ständerblechpaket (13) mit einer Ständerwicklung (16) sowie mit einer von der Welle (22) angetriebenen Kühlmittelpumpe (49) zur Förderung eines Kühlmittels, die in einem Raum angeordnet ist, der von einem Ständer- und Läuferraum (34) kühlmitteldicht getrennt ist und die Kühlmittelpumpe (49) durch eine Magnetkupplung (55) antreibbar ist, die ein Antriebsmoment von der Welle (22) auf die Kühlmittelpumpe (49) überträgt, wobei die Magnetkupplung (55) ein Antriebsteil (58) und ein Abtriebsteil (61) hat, die durch eine magnetisch unwirksame und elektrisch schlecht leitfähige Wand getrennt sind.

## Beschreibung

### Stand der Technik

Die Erfindung geht von einer elektrischen Maschine, insbesondere einem Drehstromgenerator oder einem Startergenerator nach der Gattung des Hauptanspruchs aus. Aus der deutschen Offenlegungsschrift DE-OS 34 17 307 ist bekannt, einen Drehstromgenerator und eine Kühlmittelpumpe über eine gemeinsame Welle anzutreiben. Das Antriebsmoment wird dabei über eine Riemenscheibe, wie sie von Generatoren allgemein bekannt sind, angetrieben. Die Kühlmittelpumpe ist dabei neben dem Läufer des Generatorteils angeordnet. Durch die Wellendrehung wird in der Kühlmittelpumpe das Kühlmittel gefördert. Gleichzeitig wird durch die Kühlmittelbewegung zumindest ein Teil der im Generator erzeugten Abwärme abtransportiert.

Ein Nachteil der dort bekannten Anordnung ist, dass die in das Gehäuse des Generators integrierte Pumpe voluminös baut und beispielsweise beim Ausfall derselben mitsamt dem Generator ausgewechselt werden muss und sodann relativ aufwendig zu reparieren ist.

Durch die starre Verbindung zwischen dem Läufer und der Kühlmittelpumpe ist hier insbesondere auch die Gefahr der Kavitation während des Pumpens und damit eine Zerstörungsgefahr für die Kühlmittelpumpe gegeben.

### Vorteile der Erfindung

Die erfindungsgemäße elektrische Maschine, insbesondere ein Drehstromgenerator oder ein Startergenerator, mit den Merkmalen des Hauptanspruchs hat den Vorteil, dass die Kühlwasserpumpe separat an der Maschine angebracht ist. Die Kühlmittelpumpe ist darüber hinaus relativ kompakt ausgebildet und damit leicht. Die Kühlmittelpumpe ist gut zugänglich und dadurch leicht auswechselbar, was insbesondere bei Reparaturen vorteilhaft ist.

Durch die in den Unteransprüchen aufgeführten Merkmale sind weitere vorteilhafte Ausgestaltungen der Vorrichtung nach dem Hauptanspruch möglich.

Ist das Abtriebsteil der Magnetkupplung als Erreger ausgebildet, hat dies den Vorteil, dass das aktive Element der Magnetkupplung leichter zugänglich ist. Dies ist insbesondere von Vorteil in Zusammenhang mit der Wartung des aktiven Teils, das aufwendiger gebaut ist als das nicht aktive Teil. Eine besonders einfache Gestaltung des Abtriebsteils ist dadurch gegeben, dass es als eine Magnetscheibe mit Permanentmagneten ausgebildet ist. Eine weitere vorteilhafte Ausbildung der Magnetkupplung ist dann gegeben, wenn diese als eine Art Asynchronantrieb ausgeführt ist. Die Drehmomentwirkung in der Magnetkupplung ist dadurch ruckfrei und die Kräfte in der Magnetkupplung sind leichter beherrschbar. Dadurch ist die Gefahr der Kavitation in der Kühlmittelpumpe deutlich verringert.

Eine besonders günstige Ausführung der Magnetkupplung ist dadurch gegeben, dass das Antriebsteil eine elektrisch gut leitfähige Scheibe ist und das Abtriebsteil der Erreger. In dieser Kombination ist das aufwendigere und dadurch eventuell anfälligere Bauteil leichter zu ersetzen. Führt man den Erreger der Magnetkupplung als einen Elektromagneten aus, ist es möglich, durch das Steuern oder Regeln des Stroms der Spule des Elektromagneten die Wirkungsweise und dadurch das übertragbare Moment und die Pumpenleistung bedarfsgerecht zu steuern oder regeln. Führt man einen Teil des Kühlmittelkreislaufs am Umfang des Ständers beziehungsweise an dessen Ständergehäuse und zwischen einem Außengehäuse entlang, so sind vorteilhafte Kühlungseffekte am Ständer möglich. Eine besonders günstige Gestaltung der Pumpenlagerung ergibt sich dann, wenn sich die Lagerstelle für die Pumpenwelle in einem zentralen zur Welle koaxialen Kühlmitteleinlauf befindet. Sieht man für das Pumpenrad eine zweite Lagerstelle vor, so ist es vorteilhaft, wenn diese zweite Lagerstelle sich in einem nicht selbst tragenden Teil befindet, das unabhängig von einer Lagerung der Welle des Läufers ist. Andererseits ergibt sich die Möglichkeit, die zweite Lagerstelle im Gehäuseboden der elektrischen Maschine anzubringen und dadurch Teile einzusparen.

### Zeichnungen

Die Erfindung wird nachstehend in mehreren Ausführungsbeispielen anhand der zugehörigen Zeichnungen näher erläutert. Es zeigen:
Figur 1 einen schematisierten Teilschnitt durch einen Startergenerator;
Figur 2 bis Figur 5 verschiedene Ausführungsbeispiele der Magnetkupplung;
Figur 6 als weitere Ausführungsform einen Ausschnitt der elektrischen Maschine mit Kühlmittelpumpe am hinteren Lagerbereich.

### Beschreibung der Ausführungsbeispiele

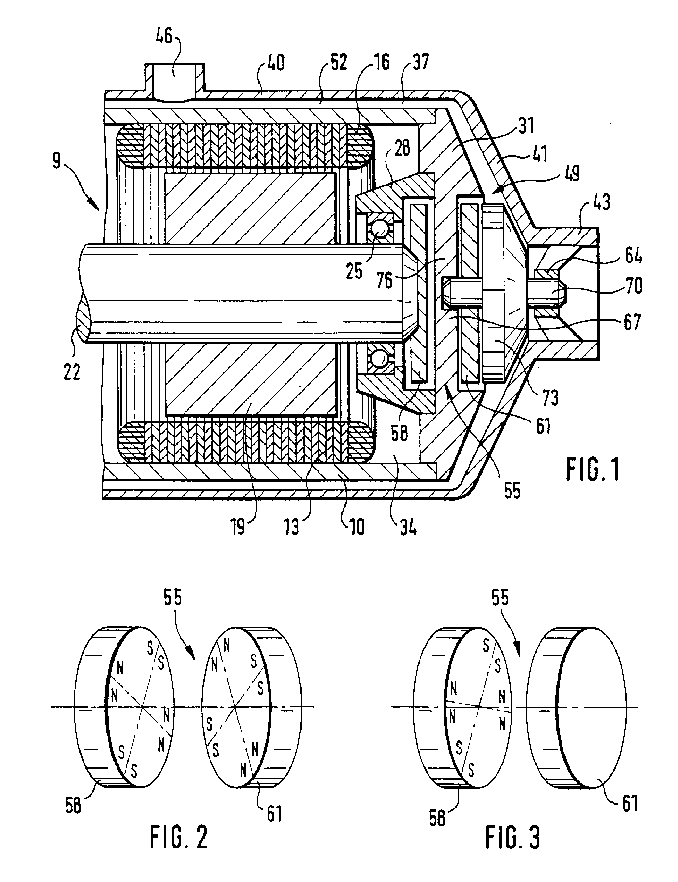

In Figur 1 ist ein erstes Ausführungsbeispiel einer elektrischen Maschine 9 dargestellt. In einem Ständergehäuse 10 sitzt ein Ständerblechpaket 13 mit einer Ständerwicklung 16. Innerhalb des Ständerblechpakets 13 ist ein drehbarer Läufer 19 angeordnet, der durch eine Welle 22 antreibbar ist. Die Welle selbst ist durch eine nicht dargestellte Riemenscheibe antreibbar. Die Welle 22 ist über ein Lager 25 in einem Lagereinsatz 28 drehbar gelagert. Der Lagereinsatz 28 sitzt fest in einem Gehäuseboden 31. Der Gehäuseboden 31 verschließt das Ständergehäuse 10 und trennt einen Ständer- und Läuferraum 34 von einem Kühlmittelraum 37. Der Gehäuseboden 31 und das Ständergehäuse 10 sind von einem topfförmigen Außengehäuse 40 umgeben. Das Außengehäuse 40 hat in einem sich stetig trichterförmig erweiterndem Boden 41 einen Kühlmitteleinlauf 43. In einem dem Kühlmitteleinlauf 43 abgewandten Bereich des Außengehäuses 40 ist ein Auslass 46 angeordnet.

Im sich trichterförmig erweiternden Boden 41 des Außengehäuses 40 ist eine Kühlmittelpumpe 49 angeordnet. Die Kühlmittelpumpe 49 fördert durch den Kühlmitteleinlauf 43 das Kühlmittel - üblicherweise Wasser oder ein Wassergemisch - von einem Kühlsystem einer Brennkraftmaschine in den trichterförmigen Bereich des Außengehäuses 40 und damit in den Raum zwischen dem Gehäuseboden 31 und dem Außengehäuse 40. Nachdem das Kühlmittel den Außenbereich des Ständergehäuses 10 erreicht hat, wird das Kühlmittel in Kühlkanäle 52 geleitet, die das Ständergehäuse 10 beispielsweise mäanderförmig umgeben. Durch den Auslass 46 verlässt das Kühlmittel die elektrische Maschine 9 und wird über einen Schlauch in das Kühlsystem der Brennkraftmaschine zurückgeführt.

Die Kühlmittelpumpe 49 ist mittels der Welle 22 und einer Magnetkupplung 55 antreibbar. Die Magnetkupplung 55 wird aus einem wellenseitigen Antriebsteil 58 und einem pumpenseitigen Abtriebsteil 61 gebildet. Die Kühlmittelpumpe 49 ist einlaufseitig in einer ersten von Streben gehaltenen Lagerstelle 64 und kupplungsseitig in einer zweiten Lagerstelle 67 gelagert. Im Betrieb treibt die Welle 22 über die Magnetkupplung 55 ein auf einer Pumpenwelle 70 angeordnetes Pumpenrad 73 an.

In Figur 2 ist ein erstes Ausführungsbeispiel der Magnetkupplung 55 dargestellt. Zur besseren Anschaulichkeit sind die beiden Kupplungshälften auseinandergeklappt dargestellt. Sowohl das Antriebsteil 58 als auch das Abtriebsteil 61 sind als Magnetscheiben ausgeführt und haben den gleichen Durchmesser. Beide Magnetscheiben sind als Permanentmagneten mit segmentförmig abwechselnden Nord- und Südpolen versehen. Zum Antrieb des Pumpenrads 73 stehen sich demzufolge Südpole eines Antriebsteils 58 und Nordpole eines Abtriebsteils 61 und umgekehrt gegenüber. Der Gehäuseboden 31 trennt mit einem Wandbereich 76 beide Kupplungshälften. Der Wandbereich 76 muss dabei aus einem magnetisch neutralen und elektrisch schlecht leitfähigen Material hergestellt sein. Hierfür eignen sich insbesondere faserverstärkte Kunststoffe, Polyphenylensulfid (PPS) und der Edelstahl X5CrNi 18 9 der unmagnetisch ist und einen hohen elektrischen Widerstand aufweist.

In Figur 3 ist ein zweites Ausführungsbeispiel der Magnetkupplung 55 und eine erste Ausführung als eine Art Asynchronantrieb dargestellt. Das Antriebsteil 58 ist hier, wie zu Figur 2 beschrieben, ausgeführt. Im Unterschied zum Ausführungsbeispiel nach Figur 2, weist dagegen das Abtriebsteil 61 lediglich eine zylinderförmige Scheibe auf. In diesem zweiten Ausführungsbeispiel der Magnetkupplung 55 wird das Antriebsteil 58 gegenüber dem Abtriebsteil 61 in eine Relativdrehung versetzt, wodurch im Abtriebsteil 61 elektrische Ströme induziert werden, die so gerichtet sind, dass das Abtriebsteil 61 durch elektromagnetische Wechselwirkungen mitgenommen und dadurch das Pumpenrad 73 angetrieben wird.

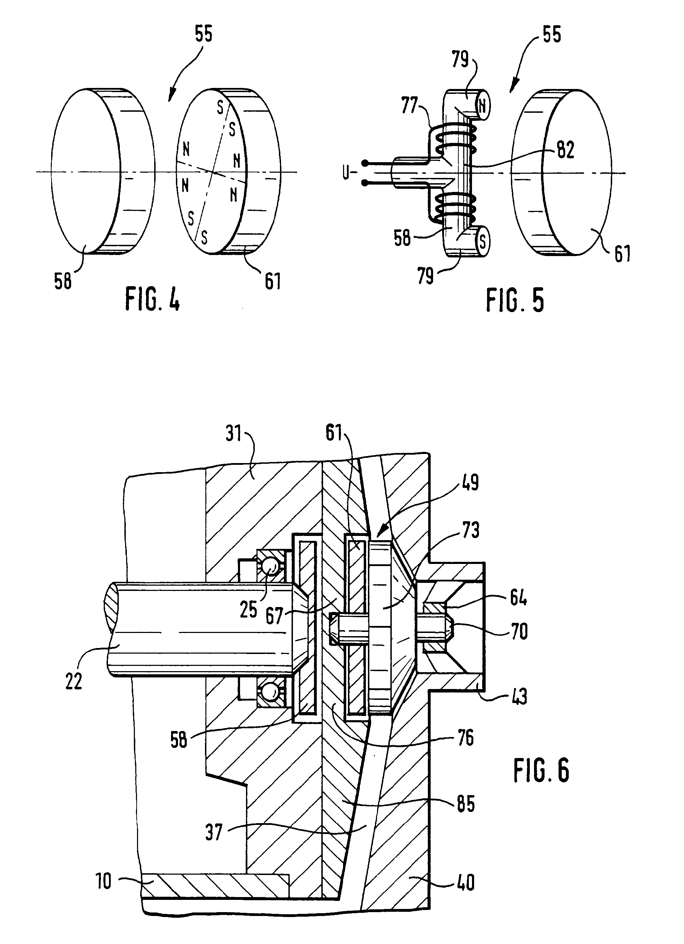

Im dritten Ausführungsbeispiel der Magnetkupplung nach Figur 4 ist die Anordnung genau umgekehrt zur Anordnung nach Figur 3. In diesem Ausführungsbeispiel wird das Antriebsteil 58, ausgeführt wie das Abtriebsteil 61 nach Figur 3, relativ zum Abtriebsteil 61, ausgeführt wie das Antriebsteil 58 nach Figur 3, relativ gedreht, dadurch werden in diesem Antriebsteil 58 elektrische Ströme induziert, die wiederum in Wechselwirkung zu dem permanentmagnetischen Feld der Abtriebsscheibe 61 treten und dadurch die Abtriebsscheibe 61 mitnehmen.

In Figur 5 ist ein viertes Ausführungsbeispiel für die Magnetkupplung dargestellt. Die Magnetkupplung 55 weist hierbei ein Antriebsteil 58 auf, das durch eine Spule 77 elektromagnetisch erregbar ist und einen Elektromagneten 78 bildet. Das Antriebsteil 58 ist U-förmig ausgebildet. Das Antriebsteil 58 hat zwei in Achsrichtung ausgerichtete Schenkel 79, die durch einen Schenkelverbinder 82 verbunden sind. Der Schenkelverbinder 82 ist durch die Spule 77 elektromagnetisch erregbar. Das Abtriebsteil 61 ist wie im Ausführungsbeispiel nach Figur 3 ebenfalls lediglich eine zylinderförmige Scheibe, die dann als eine Art Asynchronmotor antreibbar ist.

Der Strom der Spule des Elektromagneten 78 kann beispielsweise wie ein Erregerstrom für eine Erregerspule eines Klauenpolgenerators über Schleifringe und darauf gleitende Kontakte zugeführt werden. Besteht der Wunsch nach einer regel- oder steuerbaren Pumpenleistung, kann der Strom der Spule 77 durch einen Regler oder ein Steuergerät verändert werden.

Im Ausführungsbeispiel nach Figur 6 ist eine Abwandlung der Lagerung der Kühlmittelpumpe 49 dargestellt. Während im Ausführungsbeispiel nach Figur 1 die Pumpenwelle 68 einerseits in einer ersten Lagerstelle 64 im Kühlmitteleinlauf 43 gelagert ist und die zweite Lagerstelle 67 im Gehäuseboden 31, beziehungsweise dessen Wandbereich 76, ist die zweite Lagerstelle der Kühlmittelpumpe 49 nunmehr in einem separaten Wandteil 85 gelagert. Das Wandteil 85 muss in diesem Ausführungsbeispiel lediglich die Kräfte der Kühlmittelpumpe 49 aufnehmen und ist am Gehäuseboden 31 befestigt. Weiterhin ist die Welle 22 nunmehr nicht mehr mittelbar über einen Lagereinsatz 28 mit dem Gehäuseboden 31 verbunden, sondern unmittelbar im Gehäuseboden 31 gelagert. Auch hier befindet sich der Wandbereich 76 zwischen den beiden Teilen der Magnetkupplung und muss aus einem magnetisch unwirksamen und elektrisch schlecht leitfähigen Material hergestellt sein. Dadurch dass das Wandteil 85 von der Lagerung der Welle 22 unabhängig lösbar ist, kann im Störungsfall somit die Kühlmittelpumpe 49 separat von der elektrischen Maschine 9 gewechselt und repariert werden. Um zusätzliche Verluste bei der Magnetkupplung 55 zu vermeiden, kann darüber hinaus sowohl der Lagereinsatz 28 als auch der Gehäuseboden 31 aus sowohl unmagnetischem als auch möglichst schlecht elektrisch leitfähigem Material gefertigt sein.

## Patentansprüche

1. Elektrische Maschine, insbesondere Drehstromgenerator oder Startergenerator, mit einem Ständergehäuse, mit einer in dem Ständergehäuse (10) gelagerten, einen Läufer (19) tragenden Welle (22), mit einem an dem Ständergehäuse (10) befestigten, den Läufer (19) umgebenden Ständerblechpaket (13) mit einer Ständerwicklung (16) sowie mit einer von der Welle (22) angetriebenen Kühlmittelpumpe (49) zur Förderung eines Kühlmittels, die in einem Raum angeordnet ist, der von einem Ständer- und Läuferraum (34) kühlmitteldicht getrennt ist, dadurch gekennzeichnet, dass die Kühlmittelpumpe (49) durch eine Magnetkupplung (55) antreibbar ist, die ein Antriebsmoment von der Welle (22) auf die Kühlmittelpumpe (49) überträgt, wobei die Magnetkupplung (55) ein Antriebsteil (58) und ein Abtriebsteil (61) hat, die durch eine magnetisch unwirksame und elektrisch schlecht leitfähige Wand getrennt sind.

2. Elektrische Maschine nach Anspruch 1, dadurch gekennzeichnet, dass das Abtriebsteil (61) als eine Magnetscheibe mit Permanentmagneten ausgebildet ist.

3. Elektrische Maschine nach Anspruch 1, dadurch gekennzeichnet, dass die Magnetkupplung (55) als eine Art Asynchronantrieb ausgeführt ist und das Antriebsteil (58) der Erreger und das Abtriebsteil (61) eine elektrisch gut leitfähige Scheibe oder das Antriebsteil (58) eine elektrisch gut leitfähige Scheibe und das Abtriebsteil (61) der Erreger ist.

4. Elektrische Maschine nach Anspruch 2 oder 3, dadurch gekennzeichnet, dass der Erreger ein Elektromagnet (78) oder permanentmagnetisch ist.

5. Elektrische Maschine nach Anspruch 4, dadurch gekennzeichnet, dass der Strom der Spule (77) des Elektromagnets (78) steuer- oder regelbar ist.

6. Elektrische Maschine nach einem der vorhergehenden Ansprüche, dadurch gekennzeichnet, dass das Ständergehäuse (10) von einem Außengehäuse (40) umgeben ist und zwischen beiden ein Teil des Kühlmittelkreislaufs angeordnet ist.

7. Elektrische Maschine nach einem der vorhergehenden Ansprüche, dadurch gekennzeichnet, dass das Außengehäuse (40) einen zentralen zur Welle (22) koaxialen Kühlmitteleinlauf (43) hat, in dem sich eine erste Lagerstelle (64) für eine Pumpenwelle (70) befindet.

8. Elektrische Maschine nach Anspruch 7, dadurch gekennzeichnet, dass sich in einem ständer- und läuferraumseitigen Wandbereich (76), der das Antriebsteil (61) trennt, eine zweite Lagerstelle (67) für die Pumpenwelle (70) befindet.

9. Elektrische Maschine nach Anspruch 8, dadurch gekennzeichnet, dass der Wandbereich (76) Teil eines den Ständer- und Läuferraum (34) verschließenden, ein Lager (25) aufnehmenden Gehäusebodens (31) ist.

10. Elektrische Maschine nach Anspruch 8, dadurch gekennzeichnet, dass der Wandbereich (76) Teil eines Wandteils (85) ist, das unabhängig von einer Lagerung der Welle (22) lösbar ist.
